(19) Europäisches Patentamt

European Patent Office

Office européen des brevets

(11) **EP 0 632 791 B1**

(12) **EUROPÄISCHE PATENTSCHRIFT**

(45) Veröffentlichungstag und Bekanntmachung des Hinweises auf die Patenterteilung:
**23.04.1997 Patentblatt 1997/17**

(21) Anmeldenummer: **94904908.4**

(22) Anmeldetag: **26.01.1994**

(51) Int Cl.[6]: **C04B 5/06**, C04B 7/147,
C21B 3/06, C21B 3/08

(86) Internationale Anmeldenummer:
**PCT/AT94/00006**

(87) Internationale Veröffentlichungsnummer:
**WO 94/17006 (04.08.1994 Gazette 1994/18)**

(54) **VERFAHREN ZUR HERSTELLUNG VON ZEMENT AUS METALLURGISCHEN SCHLACKEN**

PROCESS FOR PRODUCING CEMENT FROM METALLURGICAL SLAG

PROCEDE DE FABRICATION DE CIMENT A PARTIR DE SCORIES METALLURGIQUES

(84) Benannte Vertragsstaaten:
**AT BE CH DE DK ES FR GB GR IE IT LI LU MC NL PT SE**

(30) Priorität: **26.01.1993 AT 126/93**

(43) Veröffentlichungstag der Anmeldung:
**11.01.1995 Patentblatt 1995/02**

(73) Patentinhaber: **"HOLDERBANK" Financière Glarus AG**
**8750 Glarus (CH)**

(72) Erfinder:
• **REY, Theo**
**CH-5000 Aarau (CH)**
• **EDLINGER, Alfred**
**CH-5400 Baden (CH)**

(74) Vertreter: **Haffner, Thomas M., Dr.**
**Patentanwalt**
**Schottengasse 3a**
**1014 Wien (AT)**

(56) Entgegenhaltungen:
DE-A- 2 611 889          DE-A- 2 912 828
FR-A- 1 499 043          FR-A- 2 370 006
LU-A- 64 992

• **DATABASE WPI Section Ch, Week 8616, Derwent Publications Ltd., London, GB; Class L02, AN 86-103768 & JP,A,61 048 455 (NIPPON JIRYOKU SENK) 10. März 1986**
• **CHEMICAL ABSTRACTS, vol. 111, no. 26, 25. Dezember 1989, Columbus, Ohio, US; abstract no. 238614p, INOE MAMORU & AL. 'Manufacture of binders from blast-furnace slags' Seite 351 ;Spalte G ; & JP,A,1 176 250 (NIPPON STEEL CORP.) 12. Juli 1989**
• **DATABASE WPI Section Ch, Week 8616, Derwent Publications Ltd., London, GB; Class L02, AN 86-103768 & JP,A,61 048 455**
• **CHEMICAL ABSTRACTS, vol. 111, no. 26, 25. Dezember 1989, Columbus, Ohio, US; abstract no. 238614p, INOE MAMORU & AL. 'Manufacture of binders from blast-furnace slags' Seite 351 ;Spalte G ; & JP-A-1176250**

**Beschreibung**

Die Erfindung bezieht sich auf ein Verfahren zur Herstellung von Zementklinker und Spezialbinderqualitäten mit hohen $\alpha'$-Belitgehalten und hoher Endfestigkeit aus metallurgischen Schlacken, bei welchem flüssige Schlacken aus Reduktionsprozessen (saure Schlacken) und Stahlwerksprozessen (basische Schlacken), wie z.B. Hochofen- und Konverterschlacke miteinander vermischt und erforderlichenfalls mit Kalk versetzt werden.

Neben klassischem Portlandzement haben Hüttenzemente im engeren Sinn je nach ihren konkreten Eigenschaften bereits eine große Bedeutung erlangt. Hüttenzemente im engeren Sinn sind feingemahlene Gemische aus Gips, Klinker und Hochofenschlacke. Sie enthalten wie Portlandzemente in der Regel etwas Gips zur Regelung der Bindezeit, wobei man dann, wenn das Gemisch weniger als etwa 30 % Hochofenschlacke enthält, von Eisenportlandzement spricht, und erst bei höherem Hochofenschlackenanteil von Hochofenzement.

Bei der Roheisengewinnung im Hochofen, bzw. nach anderen metallurgischen Reduktionsprozessen, werden Eisenerze, zumeist Sauerstoffverbindungen des Eisen, in Mischung mit festen Brennstoffen, wie Koks, auf Temperaturen von etwa 1600°C erhitzt. Im Falle der Verwendung eines Hochofens zur Reduktion von Eisenerzen kann in der Regel auf Koks und damit auf hochwertiges kohlenstoffhaltiges Material nicht verzichtet werden. Bei anderen bekannten Reduktionsprozessen kann billigere Einsatzkohle zumindest teilweise zugemischt werden. Der in diesen Fällen häufig beobachtete höhere Schwefelgehalt der Einsatzkohle kann durch geeignete Schlackenführung zumindest zum größten Teil in die Schlacke gebracht werden. Der Sauerstoff des Eisenoxids verbindet sich bei einem derartigen Reduktionsprozeß mit dem Kohlenstoff des Kokses bzw. der Einsatzkohle zu $CO_2$ und $CO$, und es entsteht ein Eisenbad, welches sich in flüssiger Form absondert.

Da aber Eisenerze nicht nur Sauerstoffverbindungen des Eisens beinhalten, sondern auch eine Reihe von Verunreinigungen, der sogenannten Gangart, müssen diese Verunreinigungen, die überwiegend toniger Natur sind und aus Kieselsäure und Tonerde bestehen, abgetrennt werden. Die Schmelztemperaturen von derartigen Gemischen aus Kieselsäure und Tonerde liegen in der Regel um einiges höher als der Schmelzpunkt des Eisens, und es muß daher bereits im Reduktionsverfahren zur Verbesserung der Abtrennbarkeit eine entsprechende Herabsetzung des Schmelzpunktes dieser Gemische aus Kieselsäure und Tonerde erreicht werden. Zu diesem Zwecke wird dem Möller Kalk zugesetzt, um ein verhältnismäßig leicht schmelzendes Gemisch aus Kalk, Kieselsäure und Tonerde, welches als Schlackenschmelze anfällt und auf der schwereren Eisenschmelze aufschwimmt, zu erlangen. Die Schlacke kann dann ebenso wie das Eisen in der Folge von Zeit zu Zeit abgestochen werden.

Der Kalksatz muß naturgemäß unter Berücksichtigung der metallurgischen Parameter gewählt werden und kann nicht ausschließlich auf die gewünschte Zusammensetzung der Schlacke abgestellt werden. Hochofenschlacke ist aber ein dem Portlandzementklinker sehr nahe verwandter Stoff, da auch Portlandzementklinker die Hauptbestandteile Kalk, Kieselsäure und Tonerde aufweist. Portlandzement ist zumeist kalkreicher als Hochofenschlacke, wobei allerdings dann, wenn man der Schlacke soviel Kalk zusetzten wollte, daß die Zusammensetzung des Portlandzementes erreicht wird, eine deutliche Erhöhung des Schmelzpunktes der Mischungen erzielt würde, welche die erwünschten Schlackenreaktionen im Hochofen wesentlich erschweren würde, bzw. zu Alkalikreisläufen und Ansätzen führen würde.

Die jeweilig konkret erzielbare Zusammensetzung der Hochofenschlacke hängt somit von der Zusammensetzung der Gangart der Erze ab und naturgemäß auch von den Nebenbestandteilen des zugesetzten Kalkes. Im Hochofenprozeß werden beispielsweise Kalksteine verwendet, welche hohe dolomitische Anteile aufweisen und somit neben Kalzium auch Magnesium in die Schlacke eintragen.

Insgesamt läßt sich somit die Schlacke unter Berücksichtigung des Umstandes, daß ein verhältnismäßig tiefer Schmelzpunkt angestrebt wird, nicht beliebig führen, um unmittelbar zu einem geeigneten Klinker zu gelangen, welcher einen hochwertigen Zement ergibt.

Neben Hochofenschlacken fallen in metallurgischen Prozessen auch Konverterschlacken an, welche gegenüber Hochofenschlacken einen wesentlich höheren Eisenoxidanteil sowie Metalleisenanteil aufweisen und prinzipiell schlechtere hydraulische Eigenschaften nach der Vermahlung eines entsprechenden Schlackenklinkers aufweisen als Hochofenschlacke. Das Wassergranulieren von Konverterschlacke ist aufgrund der Knallgasbildung ($Fe + H_2O \rightarrow FeO + H_2$) extrem gefährlich. Es ist weiters bekannt, das Abbindeverhalten von Eisenportlandzement, bzw. Hochofenzement durch bestimmte Zusätze, wie beispielsweise Branntkalk, Kalkhydrat oder Gips, wesentlich zu beschleunigen. Eine sulfatische Anregung von Hochofenschlacke, insbesondere von Sulfathüttenzement, zeichnet sich durch besonders rasche Abbindegeschwindigkeit aus.

Aus der DE-PS 16 46 685 ist die Verwendung von Schlacke aus einem LD-Konverter gemeinsam mit Hochofenschlacke zum Zweck der gemeinsamen Sinterung bekannt geworden. In der DE-OS 26 11 889 wurde bereits vorgeschlagen, Hüttenabfälle gemeinsam mit Kalk oxidierend zu schmelzen, worauf die fertige Schmelze zu einem Granulat abgeschreckt werden kann, und schließlich das Granulat unter Gipszugabe zu Zement vermahlen werden kann. Insbesondere dieses letztgenannte Verfahren, von welchem die vorliegende Erfindung ausgeht, nützt hierbei bereits die latente Wärme der Schmelzen, da die Hüttenabfälle in geeigneter Mischung in geschmolzener Form, beispielsweise als Hochofenschlacke und Stahlwerksschlacke gemeinsam mit Hüttenschuttschlämmen und anderen Zusätzen eingesetzt werden können.

Die Erfindung zielt nun darauf ab, ein Verfahren der eingangs genannten Art zu schaffen, bei welchem unter thermischer Nutzung der latenten Wärme der in einem Stahlwerk üblicherweise ablaufenden Prozesse die Qualität der erhältlichen Klinker soweit beeinflußt werden kann, daß Zement oder Spezialbinder mit verbesserten hydraulischen Eigenschaften unmittelbar erzielt werden kann.

Zur Lösung dieser Aufgabe wird ausgehend von dem eingangs genannten Verfahren erfindungsgemäß vorgeschlagen, daß in einer ersten Abkühlphase bei Temperaturen über 1000°C, vorzugsweise über 1200°C, langsamer gekühlt wird als in einer zweiten anschließenden Abkühlphase, und daß das erhaltene erstarrte Produkt granuliert und/oder gemahlen wird. Dadurch, daß nach dem Einstellen der gewünschten Mischungsverhältnisse in der Schmelze unter Ausnützung der latenten Wärme der im Hochofen bzw. Stahlwerksprozeß anfallenden flüssigen Schlacke zunächst in einer ersten Abkühlphase langsamer gekühlt wird, wird die Möglichkeit geschaffen, während des Abkühlens die für die hydraulischen Eigenschaften gewünschten Phasen, insbesondere die Alit- und Belitphasen und im besonderen Bredigit, in höherem Ausmaß auszubilden, und ein entsprechendes Kristallwachstum zu forcieren. Insbesondere der erhöhte Eisenoxidgehalt führt bei der Herstellung von Spezialbinder, wobei in diesem Falle nur Hochofen- mit Stahlwerksschlacke gemischt wird, zur höchstwertigen $\alpha$'-Belitphase. Erst nach einer Haltezeit bei Temperaturen über 1000°C, vorzugsweise über 1200°C, wird rascher abgekühlt, worauf das erhaltene erstarrte Produkt granuliert und/oder gemahlen wird. Bei einer derartigen Verfahrensweise wird darüberhinaus der Vorteil erzielt, daß in dieser ersten Abkühlphase Luft als Kühlmittel verwendet werden kann und entsprechend erhitzt werden kann, sodaß wiederum eine unmittelbar nützbare latente Wärme für einen Verbrennungsprozeß in Form von vorgewärmter Verbrennungsluft zur Verfügung gestellt werden kann. Weiters wird durch diese erste verzögerte Abkühlung auch das weitere Abkühlen, insbesondere das Granulieren, wesentlich vereinfacht. Bei entsprechender Abkühlung in der ersten Abkühlphase, wobei gegebenenfalls mit mit $O_2$ angereicherter Luft gekühlt weden kann, kann nämlich mit weit geringerem Risiko, in der Folge sogar in Wasser, abgekühlt werden, da alles in der Stahlwerksschlacke dispergierte metallische Eisen oxidiert wurde und daher sich mit Wasser kein Knallgas mehr bilden kann, wodurch eine sehr feine Zerteilung und damit eine Vereinfachung des nachfolgenden Mahlprozessens erzielt werden kann.

Bedingt durch die aufgrund des Einsatzes von flüssigen Schlacken wesentlich höhere Ausgangstemperatur kann das erfindungsgemäße Verfahren mit Vorteil so geführt werden, daß unerwünschte Alkaliüberschüsse beseitigt werden. Durch das Zumischen von Komponenten mit höheren Ca-Gehalten werden die Alkalien nach folgenden Mechanismen verdrängt:

$$2 \text{ Schlacke - Si - ONa} + CaO \rightarrow (\text{Schlacke - Si - O})_2 Ca + Na_2O$$

$$2 \text{ Schlacke - Si - ONa} + CaCl_2 \rightarrow (\text{Schlacke - Si - O})_2 Ca + 2NaCl$$

$Na_2O$ und/oder NaCl verdampfen bei den vorherrschenden Temperaturen.

$Na_2O$ und/oder $K_2O$ reagieren mit einem eventuell erhöhten $CO_2$-Partialdruck über der Schlackenschmelze zu Pottasche bzw. Soda zu eventuell vermarktungsfähigen Produkten.

Zu diesem Zweck können mit Vorteil der Schmelze Chloride und/oder chlorhältige Abfallstoffe zugesetzt werden, wodurch erreicht wird, daß Alkalichloride, aber auch Schwermetallchloride ausgetrieben werden, und in einer entsprechenden Gasreinigung abgeschieden und abgetrennt werden können. Choride können hiebei in erster Linie als Kalziumchloride eingesetzt werden. Eine derartige Herabsetzung des Natrium- und Kaliumgehaltes kann die Qualität des erzielbaren Zementes wesentlich verbessern und verringert die unerwünschte Alkali-Aggregat-Reaktion.

Um die schmelzflüssig anfallende Schlacke aus dem Hochofen und anderen Stahlwerksprozessen wie beispielsweise einem LD-Konverter auf die entsprechend gewünschte hohe Temperatur zu bringen, kann die exotherme Reaktion mit dem zuzusetzenden Kalk ausgenützt werden, wobei mit Vorteil so vorgegangen wird, daß die Schmelze auf Temperaturen über 1700°C durch exotherme Reaktion mit Kalziumoxid eingestellt wird, wodurch das Mischen und Homogenisieren wesentlich erleichtert wird. Bei Mischen von LD- mit Hochofenschlacke ergibt sich bereits aufgrund der unterschiedlichen Basizitäten ($CaO/SiO_2$-Verhältnis) eine enorme Mischungsenthalpie. Die Mischtemperatur steigt dabei auf ca. 1900°C an, die bereits zur mindest teilweisen Kalzination (Austreiben von $CO_2$) des eventuell zugesetzten Kalksteines führt. Die Viskosität der Schmelze kann hierbei mit Vorteil durch Zusatz von $CaF_2$ herabgesetzt werden.

Ein besonders vorteilhafter Klinker für die nachfolgende Vermahlung zu Zement kann dann erhalten werden, wenn so vorgegangen wird, daß Hochofen- und Konverterschlackenschmelze im Verhältnis von 30 bis 80 Gew.% Hochofenschlacke zu 20 bis 70 Gew.% Konverterschlacke eingesetzt werden.

Die erste verlangsamte Abkühlung erfolgt mit Vorteil in der ersten Abkühlphase an Luft unter Verwendung eines Schleuderrades, wodurch bereits Oxidation von freiem Eisen unter Bildung fayalithischer und/oder ferritischer Phasen und eine Vorzerkleinerung erzielt wird. Anschließend an die erste Abkühlphase kann mit Vorteil mit Wasserdampf und/oder Wasser gekühlt werden, wobei mit Rücksicht auf die wesentlich geringere Temperatur dieses Verfahren weitestgehend gefahrlos durchgeführt werden kann.

Für die sichere Ausbildung der gewünschten Gefüge zusammensetzung und der gewünschten Kristallstrukturen im Schmelzklinker wird mit Vorteil so vorgegangen, daß der Schmelzklinker einem Wirbelbett bzw. einer Wirbelschichtkaskade aufgegeben wird und mit 1,5 bis 3,5 $Nm^3$/kg Klinker Kühlluft über eine Zeit von 15 bis 40 Minuten, vorzugsweise 25 bis 30 Minuten unter Erstarrung zu Klinkergranalien mit einem Druchmesser kleiner als 4 mm, vorzugsweise etwa 2,5 mm gekühlt wird, wobei zur Verbesserung der Energiebilanz mit Vorteil die bei Temperaturen zwischen 900°C und 1100°C abgezogene Kühlluft als vorgewärmte Verbrennungsluft eingesetzt wird.

Das erfindungsgemäße Verfahren wird nachfolgend an Hand eines Ausführungsbeispieles näher erläutert:

Es wurden 30 Tonnen Hochofenschlacke in schmelzflüssigem Zustand mit 20 Tonnen LD-Schlacke vermischt, wobei durch Zugabe eines CaO/$CaCO_3$-Gemisches eine Temperatur von etwa 1800°C erzielt wurde. Nach intensiver Vermischung wurde die Schmelze über ein Schleuderrad geführt und an Luft über eine Zeit von 30 Minuten abgekühlt, wodurch es zur Ausbildung der gewünschten Kristalistrukturen kam. Nach dieser ersten Abkühlung wurde mit Wasserdampf weitergekühlt. Der Zement hatte folgende Analyse (in Gew%):

| | |
|---|---|
| $Al_2O_3$ | 5,51 % |
| MgO | 1,15 % |
| $SiO_2$ | 21,9 % |
| CaO | 65,7 % |
| $Fe_2O_3$ | 3,0 % |
| $Mn_2O_3$ | 0,12 % |
| $SO_3$ | 0,14 % |
| $P_2O_5$ | 0,49 % |
| $K_2O$ | 0,60 % |
| $Na_2O$ | 0,72 % |

Zu einem weiteren Ausführungsbeispiel (Bredigit-Klinkerherstellung) wurden 15 Tonnen 1600°C heiße LD-Schlacke mit 8 Tonnen 1500°C heißer Hochofenschlacke vermischt, um ohne Kalkzugabe einen Spezialbinder herzustellen. Die Mischungstemperatur stieg dabei auf ca 1900°C an. Die aktuelle chemische Analyse lautete:

| | |
|---|---|
| $SiO_2$ | 22,1 % |
| $Al_2O_3$ | 5,5 % |
| $Fe_2O_3$ | 15,2 % |
| CaO | 43,7 % |
| MgO | 5,8 % |
| $SO_3$ | 1,1 % |
| $K_2O$ | 0,17 % |
| $Na_2O$ | 0,05 % |
| $TiO_2$ | 0,38 % |
| $Mn_2O_3$ | 4,5 % |
| $P_2O_5$ | 0,59 % |

Die halbquantitative mineralogische Analyse ergab folgende Phasen:

~ 10 % Wüstit (FeO)

~ 50 % Bredigit ($\alpha'$-Belit)

der Rest ist amorph (Glas).

Es hat sich herausgestellt, daß zur Bredigit-Klinkerherstellung obige Mischungsverhältnisse optimal sind. Auf jeden Fall sollte der $Fe_2O_3$-Gehalt über 10 Gew% betragen, da dies den metastabilen $\alpha'$-Belit (Bredigit) stabilisiert. Bredigit ist nämlich jene Form von Belit, die in reiner Form nur bis 1450°C stabil, darunter jedoch metastabil ist und leicht zerfällt. Es konnte gefunden werden, daß ein relativ hoher $Fe_2O_3$-Gehalt die Bredigitphase stabilisiert. Ähnlich wirkt auch $P_2O_5$. Bredigit stellt aus zementtechnologischer Sicht die wertvollste Belitform dar.

**Patentansprüche**

1. Verfahren zur Herstellung von Zement aus metallurgischen Schlacken, bei welchem flüssige Schlacken aus Reduktionsprozessen und Stahlwerksprozessen, wie z.B. Hochofen- und Konverterschlacke miteinander vermischt und erforderlichenfalls mit Kalk versetzt werden, dadurch gekennzeichnet, daß in einer ersten Abkühlphase bei Temperaturen über 1000°C, vorzugsweise über 1200°C, langsamer gekühlt wird als in einer zweiten anschließenden Abkühlphase, und daß das erhaltene erstarrte Produkt granuliert und/oder gemahlen wird.

2. Verfahren nach Anspruch 1, dadurch gekennzeichnet, daß Chloride und/oder chlorhältige Abfallstoffe zugesetzt werden.

3. Verfahren nach Anspruch 1 oder 2, dadurch gekennzeichnet, daß die Schmelze auf Temperaturen über 1700°C durch exotherme Reaktion mit CaO eingestellt wird.

4. Verfahren nach Anspruch 1, 2 oder 3, dadurch gekennzeichnet, daß die Viskosität der Schmelze durch Zusatz von $CaF_2$ herabgesetzt wird.

5. Verfahren nach einem der Ansprüche 1 bis 4, dadurch gekennzeichet, daß Hochofen- und Konverterschlackenschmelze im Verhältnis von 30 bis 80 Gew.% Hochofenschlacke zu 20 bis 70 Gew.% Konverterschlacke eingesetzt werden.

6. Verfahren nach einem der Ansprüche 1 bis 5, dadurch gekennzeichnet, daß die Abkühlung in der ersten Abkühlphase an Luft unter Verwendung eines Schleuderrades erfolgt.

7. Verfahren nach einem der Ansprüche 1 bis 6, dadurch gekennzeichnet, daß anschließend an die erste Abkühlphase mit Wasserdampf und/oder Wasser gekühlt wird.

8. Verfahren nach einem der Ansprüche 1 bis 7, dadurch gekennzeichnet, daß der Schmelzklinker einem Wirbelbett bzw. einer Wirbelschichtkaskade aufgegeben wird und mit 1,5 bis 3,5 $Nm^3$/kg Klinker Kühlluft über eine Zeit von 15 bis 40 Minuten, vorzugsweise 25 bis 30 Minuten unter Erstarrung zu Klinkergranalien mit einem Druchmesser kleiner als 4 mm, vorzugsweise etwa 2,5 mm gekühlt wird.

9. Verfahren nach Anspruch 8, dadurch gekennzeichnet, daß die bei Temperaturen zwischen 900°C und 1100°C abgezogene Kühlluft als vorgewärmte Verbrennungsluft eingesetzt wird.

**Claims**

1. A process for producing cement from metallurgical slags, in which liquid slags from reduction processes and steelworks processes, such as, e.g., blast furnace and converter slags, are mixed with each other and, if required, are supplemented with lime, characterized in that in a first cooling phase at temperatures of above 1000°C, preferably above 1200°C, cooling is effected more slowly than in a second cooling phase following thereupon and that the solidified product obtained is granulated and/or ground.

2. A process according to claim 1, characterized in that chlorides and/or chlorine-containing waste substances are added.

3. A process according to claim 1 or 2, characterized in that the melt is adjusted to temperatures of above 1700°C by an exothermic reaction with CaO.

4. A process according to claim 1, 2 or 3, characterized in that the viscosity of the melt is lowered by adding $CaF_2$.

5. A process according to any one of claims 1 to 4, characterized in that blast furnace and converter slag melts are used at a ratio of 30 to 80 % by weight of blast furnace slag to 20 to 70 % by weight of converter slag.

6. A process according to any one of claims 1 to 5, characterized in that cooling in the first cooling phase is effected at air using a centrifugal wheel.

EP 0 632 791 B1

7. A process according to any one of claims 1 to 6, characterized in that, following the first cooling phase, cooling is effected by means of water vapor and/or water.

8. A process according to any one of claims 1 to 7, characterized in that the melt clinker is charged to a fluidized bed or a fluidized bed cascade and cooled by means of 1.5 to 3.5 Nm$^3$/kg clinker of cooling air over a period of time ranging from 15 to 40 minutes, preferably 25 to 30 minutes, while solidifying to clinker granules having diameters of below 4 mm, preferably approximately 2.5 mm.

9. A process according to claim 8, characterized in that cooling air drawn off at temperatures of between 900°C and 1100°C is used as preheated combustion air.

**Revendications**

1. Procédé de fabrication de ciment à partir de scories métallurgiques, selon lequel on mélange ensemble des scories liquides provenant de procédés de réduction et de procédés de traitement en aciérie, comme par exemple des scories de haut-fourneau et de convertisseur, et, si nécessaire, on les additionne de chaux, procédé caractérisé en ce que, dans une première phase de refroidissement à des températures supérieures à 1000°C, avantageusement supérieures à 1200°C, on effectue un refroidissement plus lent que dans une seconde phase suivante de refroidissement, et en ce que l'on granule et/ou on broie ou moud le produit solidifié obtenu.

2. Procédé selon la revendication 1, caractérisé en ce que l'on ajoute des chlorures et/ou des déchets chlorés.

3. Procédé selon la revendication 1 ou 2, caractérisé en ce qu'on ajuste la masse fondue, par réaction exothermique avec CaO, à des températures supérieures à 1700°C.

4. Procédé selon la revendication 1, 2, ou 3, caractérisé en ce que l'on abaisse la viscosité de la matière fondue, en lui ajoutant du CaF$_2$.

5. Procédé selon l'une des revendications 1 à 4, caractérisé en ce qu'on utilise des scories fondues de haut-fourneau et de convertisseur dans une proportion de 30 à 80% en poids de scories de haut-fourneau pour 20 à 70% en poids de scories de convertisseur.

6. Procédé selon l'une des revendications 1 à 5, caractérisé en ce que, dans la première phase de refroidissement, le refroidissement a lieu à l'air avec utilisation d'une turbine de centrifugation.

7. Procédé selon l'une des revendications 1 à 6, caractérisé en ce qu'après la première phase de refroidissement, on effectue le refroidissement avec de la vapeur d'eau et/ou avec de l'eau.

8. Procédé selon l'une des revendications 1 à 7, caractérisé en ce que le klinker fondu est transmis à un lit tourbillonnant, ou à une cascade de couches tourbillonnantes, et est refroidi à l'aide de 1,5 à 3,5 Nm$^3$ d'air de refroidissement par kg de klinker, en une période de temps de 15 à 40 minutes, avantageusement de 25 à 30 minutes, avec solidification donnant des granules de klinker ayant un diamètre inférieur à 4 mm, avantageusement un diamètre d'environ 2,5 mm.

9. Procédé selon la revendication 8, caractérisé en ce que l'air de refroidissement retiré à des températures comprises entre 900°C et 1100°C sert d'air préchauffé de combustion.